# EUROPEAN PATENT SPECIFICATION

(11) **EP 0 898 583 B1**
(45) Date of publication and mention of the grant of the patent: **02.04.2003**
(21) Application number: 96913386.7
(22) Date of filing: 17.05.1996
(51) Int. Cl.: C08F 2/44, C08F 120/14, C08F 20/12

(54) **IMPROVEMENTS IN FLUORESCENT MATERIALS**
VERBESSERUNGEN BEI FLUORESZIERENDEN MATERIALIEN
AMELIORATION CONCERNANT DES MATERIAUX FLUORESCENTS

(43) Date of publication of application: 03.03.1999
(73) Proprietor: SMITH, Geoffrey Burton, Epping, NSW 2121 (AU); UNIVERSITY OF TECHNOLOGY, SYDNEY, Broadway, NSW 2007 (AU); SKYDOME INDUSTRIES LIMITED, Five Dock, NSW 2046 (AU); FRANKLIN, James Bruce, Sydney, NSW 2006 (AU)
(72) Inventor: FRANKLIN, James, Bruce, Sydney, NSW 2006 (AU); SWIFT, Paul, Desmond, Leichhardt, NSW 2040 (AU)
(74) Representative: Kjerrumgaard, Bent
(86) International application number: AU9600303
(87) International publication number: WO96036647

(56) References cited:
- EP-A- 0 004 655
- DE-A- 3 103 936
- DE-A- 4 142 150
- FR-A- 2 511 840
- PATENT ABSTRACTS OF JAPAN, E-135, page 77; & JP,A,54 083 365 (HITACHI SEISAKUSHO KK), 7 March 1979.
- PATENT ABSTRACTS OF JAPAN, C-516, page 83; & JP,A,63 054 465 (ASAHI CHEM IND CO LTD), 8 March 1988.
- PATENT ABSTRACTS OF JAPAN, C-547, page 72; & JP,A,63 175 083 (MITSUI TOATSU CHEM INC), 19 July 1988.
- PATENT ABSTRACTS OF JAPAN, C-963, page 51; & JP,A,04 093 388 (MITSUI TOATSU CHEM INC), 26 March 1992.

## Description

### FIELD OF THE INVENTION

The present invention relates to improvements in fluorescent materials and, in particular, to a luminescent sunlight collector or solar concentrator that includes a fluorescent dyed polymer composition having improved half-length properties that creates enhanced light emission from a long length of dyed polymer composition in the luminescent sunlight collector.

### BACKGROUND ART

It is known to incorporate certain fluorescent dyes in polymer sheets for the purpose of making luminescent sunlight collectors. For instance, the red fluorescent dye, known by the trade name Lumogen F Red 300 and having the formula perylene-1,6,7,12-tetraphenoxy-3,4,9,10-tetracarboxylic acid -bis (2',6'-diisopropylanilide), has been incorporated into a poly(methyl methacrylate) (PMMA) polymer to provide sunlight collector sheets for use in solar based illumination of buildings and as fluorescent concentrators for solar cells.

Fluorescent dyes of this type have, however, suffered from the shortcoming that there are light emission losses through various mechanisms, such as from absorption and from scattering in dyed polymer. Losses through absorption include dye based self-absorption due to overlap between the dye's emission and absorption spectra (i.e. insufficient Stokes Shift in the dye molecules), non-radiative absorption by the dye, and absorption by the polymer. Scattering losses are primarily due to inhomogeneities in the polymer from which the collector is fabricated. Sources of scattering include complexes of dye molecules, colloidal particles, crystal boundaries, regional variations in refractive index, bubbles, voids, foreign inclusions (such as dust particles) and surface defects.

Any type of absorption or scattering (or any other light emission loss mechanism) will decrease the dyed polymer's half-length.

The half-length of a material is the distance over which light generated by fluorescent emission falls by a factor of two. The value of this parameter is a key factor in the suitability of a dyed material for making a luminescent sunlight collector. This is because any material in a luminescent sunlight collector located more than one half-length from the point at which fluorescent light is taken out of the system (usually through the sheet's edges) makes only a small contribution to the collector's output. Thus the material's half-length limits the maximum useful size of a luminescent sunlight collector and hence the maximum luminous output. (Beyond a certain point, doubling the area of a collector gives only a small increase in output.) The small half-lengths of dyed polymer made by previous methods have prevented the construction of luminescent sunlight collectors which have a useful luminous output and good colour balance.

### DISCLOSURE OF INVENTION

It is an object of the present invention to provide a means for increasing the half-length of a fluorescent dyed polymer so as to increase the distance over which the fluorescently emitted light can travel within any length of a luminescent sunlight collector and be emitted from the collector with maximum intensity or brightness.

According to the invention, there is provided a process for preparing a fluorescent dyed polymer composition useful in a luminescent sunlight collector, comprising dissolving by means of ultrasonic agitation a fluorescent dye in a solution of mono(methyl methacrylate) or partially polymerised methyl methacrylate, so that in the presence of a sufficient quantity of an organic peroxide initiator added either before, during or after the dissolution of the fluorescent dye in the solution, and at a sufficient temperature, polymerisation is initiated so as to produce the fluorescent dyed polymer composition without the formation of voids or bubbles.

It is preferred that the fluorescent dye is a perylene dye or a napthalimide dye of a type that is useful for luminescent sunlight collectors or solar concentrators. Preferred forms of these dyes are the red fluorescent dye, known by the trade name Lumogen F Red 300 and having the formula perylene-1,6,7,12-tetraphenoxy-3,4,9,10-tetracarboxylic acid-bis (2',6'-diisopropylanilide), the green fluorescent dye (sometimes called a "yellow" dye), known by the trade name Lumogen F Yellow 083, and having the formula isobutyl 4,10-dicyanoperylene-3,9-dicarboxylate, the violet/blue fluorescent dye, known by the trade name Lumogen F Violet 570, and having the formula 4,5-dimethyloxy-N-(2-ethyl hexyl) napthalimide, and the orange fluorescent dye, known by the trade name Lumogen F 240, and having the formula perylene-3,4,9,1 1-tetracarboxylic acid bis-(2'6'-diisopropylanilide).

It is preferred that the dye is dissolved in a solution of mono(methyl methacrylate) or partially polymerised methyl methacrylate at a temperature between about 30°C and about 100°C by means of ultrasonic agitation for between about 1 and 5 minutes combined with stirring.

In the context of the present invention, it is to be understood that reference to the term "a fluorescent dye" in the aforementioned process may refer to a mixture of fluorescent dyes considered suitable by persons skilled in the art.

Partially polymerised methyl methacrylate solutions may comprise solutions of varying mixtures of mono(methyl methacrylate), di(methylmethacrylate) and possibly small amounts of higher molecular weight methyl methacrylates that a person skilled in the art would appreciate as providing a sufficient starting solution for casting poly(methyl methacrylate). As is well known in the art, solutions of partially polymerised methyl methacrylate may be prepared by terminating polymerisation of mono(methyl methacrylate) prior to completion. Advantageous features of utilizing a starting solution of partially polymerised methyl methacrylate in the process of the present invention are that shrinkage of the resulting solidified polymer is reduced and heat production during the polymerisation step of the process of the present invention is reduced.

In carrying out the process of the invention with a starting solution of partially polymerised methyl methacrylate, it will be apparent to the skilled person in the art that such a starting solution must not contain any residual initiator left over from the partial polymerisation process that would interfere with the process of the present invention and compromise the efficacy of the fluorescent dyed polymer composition so produced.

It is preferred that the organic peroxide initiator is an alkyl peroxy ester. A particularly preferred alkyl peroxy ester is t-Butyl Per-(2-Ethyl) Hexanoate, also known as TBPEH.

It is theorised that an especially advantageous characteristic of the organic peroxide initiator selected for use in the process of the present invention is that it has low cross-linking tendency, so that polymerisation results in a preponderance of linear chain dyed polymer molecules over cross linked chains of dyed polymer molecules.

Polymerisation should not result in the formation of voids or bubbles in the resultant fluorescent dyed polymer composition as these may cause unwanted light scattering effects and other diminutions of the half length of the fluorescently emitted light.

It has been found by the inventors that the organic peroxide initiator may be added to the solution either before, during or after the dissolution of the fluorescent dye in the solution, without adversely affecting the reaction kinetics of the process or the fluorescent dyed polymer composition so produced.

The process may further include the step of adding diethyleneglycolbis(allylcarbonate) (DEGBAC).

According to another aspect of the present invention, there is provided a fluorescent dyed polymer composition prepared by any of the above mentioned processes.

According to yet another aspect of the invention, there is provided a luminescent sunlight collector comprising a fluorescent dyed polymer composition prepared by any of the abovementioned processes.

### METHODS FOR CARRYING OUT THE INVENTION

In order that the invention may be more readily understood and put into practical effect, reference will be made to the following Examples of preferred processes for preparing fluorescent dyed polymer compositions that can be used as luminescent sunlight collectors.

### Example 1

A small quantity of Lumogen F Red 300 dye (powder form) was dissolved in mono(methyl methacrylate) (referred to hereinafter as MMA) at 50°C by ultrasonic agitation for about 5 minutes. No solvents were used for dissolution purposes. A quantity of this solution was then added to pure MMA to give a dye concentration in the final solution of about 0.005% W/W. The solution was then stirred and ultrasonic agitation was applied for about two minutes.

A small amount of initiator in the form of t-Butyl Per-(2-Ethyl) Hexanoate (TBPEH) was then added so that it comprised about 0.050% W/W of the solution. The solution was then stirred and ultrasonic agitation was applied for about one minute.

The solution was cast in a verticle Teflon (trade mark) tube and then heat treated by immersion in a hot water bath to enable polymerisation to proceed to completion, thereby forming a fluorescent dyed polymer composition that can be used as a luminescent sunlight collector.

The half-length of the fluorescent emission of the Lumogen F Red 300 dye incorporated in a luminescent sunlight collector produced as in this Example was found to be about 107cm. This compares favourably with the half-length of 31cm for Lumogen F Red 300 dye incorporated in a PMMA based polymer made with standard techniques.

### Example 2

A fluorescent dyed polymer composition was prepared in accordance with the process conditions described in Example 1 but using the green dye Lumogen F Yellow 083 at a concentration of 0.007% W/W instead of the aforementioned Lumogen F Red 300 dye. (This dye gives green fluorescent emission at the aforementioned concentration.) The half-length of the fluorescent emission of the green Lumogen F Yellow 083 dye incorporated in the luminescent sunlight collector produced as in this Example was found to be about 98cm. This compares favourably with the half-length of 56cm for Lumogen F Yellow 083 dye incorporated in a PMMA based polymer made with standard techniques.

### Example 3

A small quantity of Lumogen F Red 300 dye (powder form) was dissolved in mono(methylmethacrylate) (MMA) at 50°C by ultrasonic agitation for about 5 minutes. No solvents were used for dissolution purposes.

Diethyleneglycolbis(allylcarbonate) (DEGBAC) was added in liquid form by stirring for about 1 minute so that the solution comprised about 84% W/W MMA and about 16% W/W DEGBAC.

A small amount of TBPEH initiator was added by ultrasonic agitation for about 1 minute so that it comprised about 0.05% W/W of the total solution. The Lumogen F Red 300 dye had a final concentration in the solution of about 0.005% W/W.

The solution was cast in a verticle Teflon (trade mark) tube and then heat treated by immersion in a hot water bath to cause polymerisation to completion. The half-length of the fluorescent emission of the Lumogen F Red 300 dye incorporated in a luminescent sunlight collector produced as in this Example was found to be 109 cm.

### Example 4

A fluorescent composition was prepared in accordance with the process conditions described in Example 3 except that it had final concentrations of about 4% W/W DEGBAC and about 96% W/W MMA. The half-length of fluorescent emission of the Lumogen F Red 300 dye incorporated in such a collector was found to be 93cm.

### Example 5

A fluorescent dyed polymer composition was prepared in accordance with the process conditions described in Example 1 but using the green dye Lumogen F Yellow 083 at a concentration of 0.007% W/W instead of the Lumogen F Red 300 dye, and adding DEGBAC in liquid form to the solution by stirring for about 1 minute so that the solution comprised about 96% W/W MMA and 4% W/W DEGBAC.

The half length of the fluorescent emission of the Lumogen F Yellow 083 dye incorporated in a luminescent sunlight collector produced as in this Example was found to be about 95cm.

Various modifications may be made in details of concentration ranges and other process parameters without departing from the scope or ambit of the invention.

## Claims

1. A process for preparing a fluorescent dyed polymer composition useful in a luminescent sunlight collector, comprising dissolving by means of ultrasonic agitation a fluorescent dye in a solution of mono(methyl methacrylate) or partially polymerised methyl methacrylate, so that in the presence of a sufficient quantity of an organic peroxide initiator added either before, during or after the dissolution of the fluorescent dye in the solution, and at a sufficient temperature, polymerisation is initiated so as to produce the fluorescent dyed polymer composition without the formation of voids or bubbles.

2. The process of claim 1 wherein the fluorescent dye is a perylene dye or a napthalimide dye of a type that is useful for luminescent sunlight collectors.

3. The process of claim 2 wherein the fluorescent dye is perylene-1,6,7,12-tetraphenoxy-3,4,9,10-tetracarboxylic acid bis-(2',6'-diisopropylanilide).

4. The process of claim 2 wherein the fluorescent dye is isobutyl 4,10-dicyanoperylene-3,9-dicarboxylate.

5. The process of claim 2 wherein the fluorescent dye is 4,5-dimethyloxy-N-(2-ethyl hexyl) napthalimide.

6. The process of claim 2 wherein the fluorescent dye is perylene-3,4,9,11-tetracarboxylic acid bis-(2',6'-diisopropylanilide).

7. The process of claim 1 wherein the temperature is between about 30°C and about 100°C.

8. The process of claim 1 wherein the ultrasonic agitation occurs for between 1 minute and 5 minutes.

9. The process of claim 1 wherein the organic peroxide initiator is an alkyl peroxy ester.

10. The process of claim 9 wherein the alkyl peroxy ester is t-Butyl Per(2-Ethyl) Hexanoate.

11. The process of claim 1 further including the step of adding diethyleneglycolbis (allylcarbonate) to the solution.

12. A fluorescent dyed polymer composition prepared by the process of any of claims 1 to 11.

13. A luminescent sunlight collector comprising a fluorescent dyed polymer composition prepared by the process of any of claims 1 to 11.

## Revendications

1. Procédé de préparation d'une composition polymère colorée fluorescente utile dans un collecteur de lumière solaire luminescent, comprenant la dissolution, au moyen d'une agitation par ultrasons, d'un colorant fluorescent dans une solution de mono(méthylméthacrylate) ou de méthacrylate de méthyle partiellement polymérisé, de telle sorte qu'en présence d'une quantité suffisante d'un initiateur à base de peroxyde organique, ajouté soit avant, soit pendant, soit après la dissolution du colorant fluorescent dans la solution, et à une température suffisante, la polymérisation démarre de façon à produire la composition polymère colorée fluorescente sans qu'il y ait formation de lacunes ou de bulles.

2. Procédé selon la revendication 1, dans lequel le colorant fluorescent est un colorant au pérylène ou un colorant au naphtalimide d'un type utile pour des collecteurs de lumière solaire luminescents.

3. Procédé selon la revendication 2, dans lequel le colorant fluorescent est l'acide pérylène-1,6,7,12-tétraphénoxy-3,4,9,10-tétracarboxylique bis-(2',6'-di-isopropylanilide).

4. Procédé selon la revendication 2, dans lequel le colorant fluorescent est le 4,10-dicyanoperylène-3,9-dicarboxylate d'isobutyle.

5. Procédé selon la revendication 2, dans lequel le colorant fluorescent est le 4,5-diméthyloxy-N-(2-éthyl hexyl) naphtalimide.

6. Procédé selon la revendication 2, dans lequel le colorant fluorescent est l'acide pérylène-3,4,9,11-tétracarboxylique bis-(2',6'-di-isopropylanilide).

7. Procédé selon la revendication 1, dans lequel la température est comprise entre 30°C environ et 100°C environ.

8. Procédé selon la revendication 1, dans lequel l'agitation par ultrasons se fait pendant 1 minute à 5 minutes.

9. Procédé selon la revendication 1, dans lequel l'initiateur au peroxyde organique est un alkyl peroxy ester.

10. Procédé selon la revendication 9, dans lequel l'alkyl peroxy ester est l'hexarioate de t-butyl per(2-éfliyle).

11. Procédé selon la revendication 1, comprenant de plus l'étape d'addition de diéthylèneglycol-bis (allylcarbonate) à la solution.

12. Composition polymère colorée fluorescente préparée par le procédé selon l'une quelconque des revendications 1 à 11.

13. Collecteur de lumière solaire luminescent comprenant une composition polymère colorée fluorescente préparée par le procédé selon l'une quelconque des revendications 1 à 11.

## Patentansprüche

1. Verfahren zur Herstellung einer fluoreszierend gefärbten Polymer-Verbindung verwendbar in einem lumineszierenden Sonnenlichtkollektor, umfassend das Auflösen eines fluoreszierenden Farbstoffs in einer Mono(methylmethacrylat)-oder teilweise polymerisierten Methyl-methacrylat-Lösung durch Ultraschall-Agitation, so dass die Polymerisation in Gegenwart einer ausreichenden Menge eines vor, während oder nach der Auflösung des fluoreszierenden Farbstoffs in der Lösung zugesetzten organischen Peroxid-Initiators und bei ausreichender Temperatur initiiert wird, wodurch die fluoreszierend gefärbte Polymer-Verbindung ohne die Bildung von Hohlräumen oder Blasen hergestellt wird.

2. Verfahren nach Anspruch 1, worin der fluoreszierende Farbstoff ein Perylen-Farbstoff oder ein Napthalimid-Farbstoff einer für lumineszierende Sonnenlichtkollektoren verwendbaren Farbstoffart ist.

3. Verfahren nach Anspruch 2, worin der fluoreszierende Farbstoff Perylen-1,6,7,12-tetraphenoxy-3,4,9,10-tetracarboxylsäure bis-(2',6'-diisopropylanilid) ist.

4. Verfahren nach Anspruch 2, worin der fluoreszierende Farbstoff Isobutyl 4,10-dicyanoperylen-3,9-dicarboxylat ist.

5. Verfahren nach Anspruch 2, worin der fluoreszierende Farbstoff 4,5-dimethyloxy-N-(2-ethyl-hexyl)-napthalimid ist.

6. Verfahren nach Anspruch 2, worin der fluoreszierende Farbstoff Perylen-3,4,9,11-tetracarboxy-säure-bis-(2',6'-diisopropylanilid) ist.

7. Verfahren nach Anspruch 1, worin die Temperatur zwischen etwa 30°C und etwa 100°C liegt.

8. Verfahren nach Anspruch 1, worin die Ultraschall-Agitation für zwischen 1 Minute und 5 Minuten ausgeführt wird.

9. Verfahren nach Anspruch 1, worin der organische Peroxid-Initiator ein Alkylperoxyester ist.

10. Verfahren nach Anspruch 9, worin der Alkylperoxyester t-Butyl-per-(2-Ethyl)-hexanoat ist.

11. Verfahren nach Anspruch 1 weiters umfassend den Schritt des Hinzufügens von Diethylenglycol-bis-(allylcarbonat) zu der Lösung.

12. Fluoreszierend gefärbte Polymer-Verbindung erhalten durch das Verfahren nach einem der Ansprüche 1 bis 11.

13. Lumineszierender Sonnenlichtkollektor umfassend eine fluoreszierend gefärbte Polymer-Verbindung erhalten durch das Verfahren nach einem der Ansprüche 1 bis 11.
